# NEW EUROPEAN PATENT SPECIFICATION

(11) **EP 0 275 977 B2**
(45) Date of publication and mention of the opposition decision: **19.08.1998**
(45) Mention of the grant of the patent: 07.12.1994
(21) Application number: 88100690.2
(22) Date of filing: 19.01.1988
(51) Int. Cl.: C23C 16/30, C23C 28/04, C04B 41/50, B23B 27/14

(54) **Composite coatings**
Verbundschichten
Revêtements composites

(30) Priority: 20.01.1987 US 4999; 20.01.1987 US 5000
(43) Date of publication of application: 27.07.1988
(73) Proprietor: VALENITE INC., Wilmington Delaware 19801 (US)
(72) Inventor: Sarin, Vinod K., Lexington, MA 02173 (US); Hintermann, Hans Erich, CH-3232 Ins (CH)
(74) Representative: Grünecker, Kinkeldey, Stockmair & Schwanhäusser Anwaltssozietät

(56) References cited:
- FR-A- 2 144 824
- FR-A- 2 393 852
- GB-A- 1 291 388
- GB-A- 1 408 193
- JP-A- 5 739 168
- JP-A-61 201 778
- US-A- 4 112 148
- PATENT ABSTRACTS OF JAPAN, vol. 9, no. 12 (C-261)[1735], 18th January 1985; & JP-A-59 162 270
- PATENT ABSTRACT OF JAPAN, vol. 9, no. 91 (C-277)[1814], 19th April 1985; & JP-A-59 222 570
- PATENT ABSTRACTS OF JAPAN, vol. 10, no. 303 (C-378)[2359], 16th October 1986; & JP-A-61 117 260

## Description

This invention relates to a wear resistant article comprising a two phase composite oxide coating deposited on a WC-Co composite substrate.

Cemented carbide and hard ceramic materials are known and are used extensively in such applications as mining tool bits, metal cutting and boring tools, meta drawing dies, wear-resistant machine parts and the like. Hard ceramic materials, as used herein refers to such compositions as Al₂O₃, Si₃N₄, silicon aluminum oxynitride and related compounds, as hard and dense monolithic or composite materials. The composites include those containing whiskers and or particulates of SiC, Si₃N₄, other ceramic materials, and metal carbides, nitrides, and carbonitrides such as TiC and TiN. It is also known that the service properties such as wear, high temperature and chemical resistance of such materials may be enhanced by the application of one or more thin coatings of, for example, metal carbides, metal nitrides, or ceramics. Great strides have been made in improved performance of these coated suostrates, for example in machining applications, by refinement of the substrate compositions and by applying various combinations of superimposed layers of coating materials. However, increasingly stringent use conditions, for example use at high cutting speeds or in extremely high temperatures and/or corrosive environments, are placing increasing demands upon the performance of such materials.

FR-A-2393852 discloses a wear resistant article comprising a sintered carbide substrate coated with a layer consisting of Al₂O₃ and small amounts of titane, zirconium and/or hafnium which are added in order to promote the formation of a kappa-Al₂O₃ phase. The coating as descriped in this document is maintained either in form of a single phase layer or in the form of a solid solution of the starting materials. There are no hints to use discrete particles in the coating or to form a stratified layer structure of the coating in order to achieve surprising results of the abrasion resistance under extreme conditions of use.

Furthermore JP-A-59222570 describes a composite ceramic coating film being a solid solution as a mixture of the materials Al₂O₃ and zirconium oxide, Al₂O₃ and hafnium oxide and Al₂O₃ and zirconium oxide-hafnium oxide. Since both starting materials react with each other while performing the plasma CVD method, it is not possible to achieve discrete particles of one of the material in the phase of another material.

The invention described herein and recited In the appended claims provides an article in which a wear resistant composite coating of controlled composition and distribution is deposited on a cemented carbide or hard ceramic substrate, the article showing improved abrasion resistance under extreme conditions of use.

A wear resistant article according to the invention comprises a WC-Co composite substrate body, a fully dense adherent, wear resistant, composite ceramic coating on the substrate comprising: a continuous Al₂O₃ layer about 0.1 - 20 microns thick and ZrO₂ particles dispersed within the Al₂O₃ portions wherein the ZrO₂ particles comprise less than 5 volume % of the composite layer, wherein the composite ceramic coating is a stratified layer in which Al₂O₃/ZrO₂ portions alternate with the single-phase continuous Al₂O₃ portions.

The invention will now be described in detail with reference to the accompanying drawings in which:

FIGURE 1 is a schematic cross-sectional representation of an article according to the invention.

FIGURE 2 is a bar graph of comparative machining results.

The article according to the present invention may be prepared by deposition of an adherent two phase composite oxide-based coating on a WC-Co composite substrate. The deposition of a two phase oxide-based composite coating which is adherent to the substrate, wear resistant, high temperature resistant and resistant to chemical attack or breakdown at high temperatures depends on careful control of the process parameters. The outstanding properties of the coating are a result of the second phase of discrete particles of ZrO₂, within an Al₂O₃ matrix. The particles are controlled to achieve, a stratified structure of single-phase oxide matrix portions alternating with two phase matrix particle portions, preferably disposed at controlled intervals throughout the matrix. Similarly, the deposition may be controlled to deposit a single-phase continuous portion of controlled depth of the matrix material below the two phase portion of the coating.

The preferred process for preparing the articles according to the invention involveds the use of a mixture of gases including a mixture of metal halides and other reactant gases under carefully controlled conditions to deposit by chemical vapor reposition (CVD) compounds of the metals on a substrate. The preferred process involves passing over the substrate a first gaseous mixture of first halide of aluminum, with other reactant gases, and optionally a carrier gas. The temperature is about 900°-1250 °C for cemented carbide substrates or about 900°-1500°C for hard ceramic substrates, and the pressure between about 1 torr and about ambient pressure. The partial pressure ratios, the flow rate, and the length of time is sufficient to deposit a continuous, fully dense, adherent, wear resistant layer of aluminum oxide about 0.1-20 microns thick on the substrate. One additional vapor halide of, zirconium, is mixed with the first gaseous mixture. The additional metal halide vapor is different from the first halide vapor, and is mixed at a partial pressure selected to form at least one discontinuous additional phase, dispersed as discrete particles within the continuous oxide layer, to form a wear resistant composite ceramic layer on the substrate. Alternatively, the article may be produced by appropriate physical vapor deposition (PVD) techniques.

In the most preferred CVD process, the metal halides are produced by passing halide gas or gases over the metals, for example metal particulates. For example, the metals may be combined as a mixture of metals, as a metal alloy, or as metal salts. A single halide gas is passed over the combined metals to form a mixture of metal halides. Alternatively, at least the metal forming the matrix is separate, and separate halide gas streams are passed over the metals to form separate metal halides, which are later combined. Carrier gases, for example Ar, may be combined with the halide gases. Preferred halide gases are Cl₂ and HCl, forming with the metals described above AlCl₃, and or ZrCl₄. These are combined with suitable other gases such as H₂ and CO₂ or other volatile oxidizing gases, such as H₂O.

In order to achieve a first-phase matrix containing discrete particles of a second phase, it is important to control the relative preposition by controlling such parameters as gas flow rates to produce the desired deposition of first and second phase materials.

Further control over the deposition process may be achieved by pulsing the metal halide gas forming the second phase while maintaining continuous flow of the metal halide gas forming the matrix. This pulsing method may also be used to control the distribution of the second chase withing the matrix, to achieve a stratified distribution as described above.

Likewise, a single metal halide gas may be allowed to flow, with the other reactant gases, for a period of time sufficient to deposit a continuous single-phase portion of the material comprising the matrix, before the two-phase portion or alternating single-phase two-phase portion of the coating is deposited.

Composite coatings according to the invention are: Al₂O₃ matrix ZrO₂ particles.

The terms second phase and two-phase as used herein refer to composites memorising a first phase, continuous oxide matrix compound and one or more additional or second phases which may be a single compound or more than one compound, in the form of discrete particles. The articles may be oxides of a single metal or a solid solution of oxides of more than one metal, and the individual particles maybe of the same or different compounds. The particles disclosed herein may be regularly shaped, as spheres, rods whiskers, etc. or irregularly shaped.

The composite coatings according to the invention are fully dense, adherent, and make it possible to combine the wear-resistant properties of two or more components without the problems associated with differences in expansion coefficients and adhesion presented by layering of continuous coatings of the materials.

Further improvement in the adhesion of the coating to the substrate may be achieved by depositing between the composite coating and the substrate a thin intermediate layer of TiC, TiN, or other carbide, nitride or carbonitride of Ti, Zr, Hf, Va, Nb, Ta, Cr, Mo, W, Si or B. Such deposition may be achieved in known manner as a preliminary part of the same coating process or in a separate, prior coating process. Similarly, for special application, for example friction, cosmetic, wear or thermal purposes, a thin outer layer such as TiN may be applied in known manner over the composite coating.

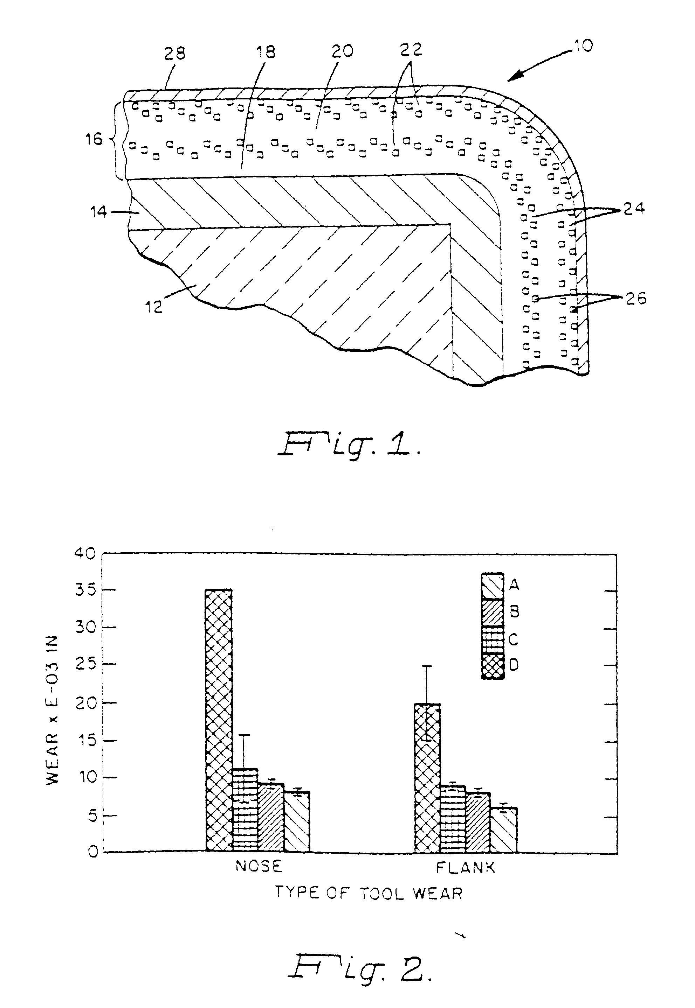

Figures 1, not drawn to scale, schematically illustrates typical coated articles 10 and 30 according to the invention. As shown in Figure 1, substrate 12 is a shaped cemented WC material, and may be a cutting tool or other article requiring wear resistance under the extreme conditions described above. A thin layer 14 of TiC covers the substrate, at least in the area subjected to wear. Composite layer 16 is deposited over TiC layer 14, and is made up of single-phase matrix portions 18 and 20 of Al₂O₃, and two-phase portions 22 of an Al₂O₃ matrix 24 and discrete particles 26 of ZrO₂. As shown in Figure 1, there is no separation between the Al₂O₃ of matrix 24 of two-phase portions 22 and that of single-phase matrix portions 18 and 20. The Al₂O₃ of the composite coating is a single continuous matrix having a second phase of controlled composition and distribution dispersed therein. An outer layer 28 of TiN is deposited over the composite layer, giving article 10 a distinctive identifying color.

### EXAMPLES 1-6

After rinsing of all gas lines with their respective gases for 0.5-1 hr, samples of cutting tool inserts of a cemented carbide material, steel cutting grade C-5, were coated with a layer of TiC about 3 microns thick by known techniques in a CVD reactor. An excess of preweighed zirconium metal chips was placed in a separate vessel disposed in the reactor. An excess of aluminum chips was placed in a vessel outside the reactor. The reactor was evacuated to about 13.3 mbar (10 torr), then heated under low pressure, while being flushed with flowing hydrogen, to increase the outgassing before deposition. Following the deposition procedure, the reactor was cooled, at the deposition pressure and while being flushed with hydrogen, to about 300°C, then under ambient pressure and flowing nitrogen to room temperature.

The deposition reaction conditions for Examples 1-6 are given in Table I, below. For all of these Examples the halide gas was Cl₂, the carrier gas for the Al and Zr reactions was Ar, and the other reactant gas was CO₂ with H₂ as a carrier. The Cl₂ flow rates were adjusted to give the metal chloride flow rates shown in Table I. The deposition pressure for Examples 1-6 was 66.5 mbar (50 torr); the temperature, 1040°C. For each of these Examples, a period of Al₂O₃ deposition (single-phase) ranging from 0.5 to 2.5 hrs was carried out before the two-phase Al₂O₃/ZrO₂ deposition was begun. During the single-phase deposition Ar gas was allowed to flow over the Zr, but the Cl₂ gas flow was shut off.

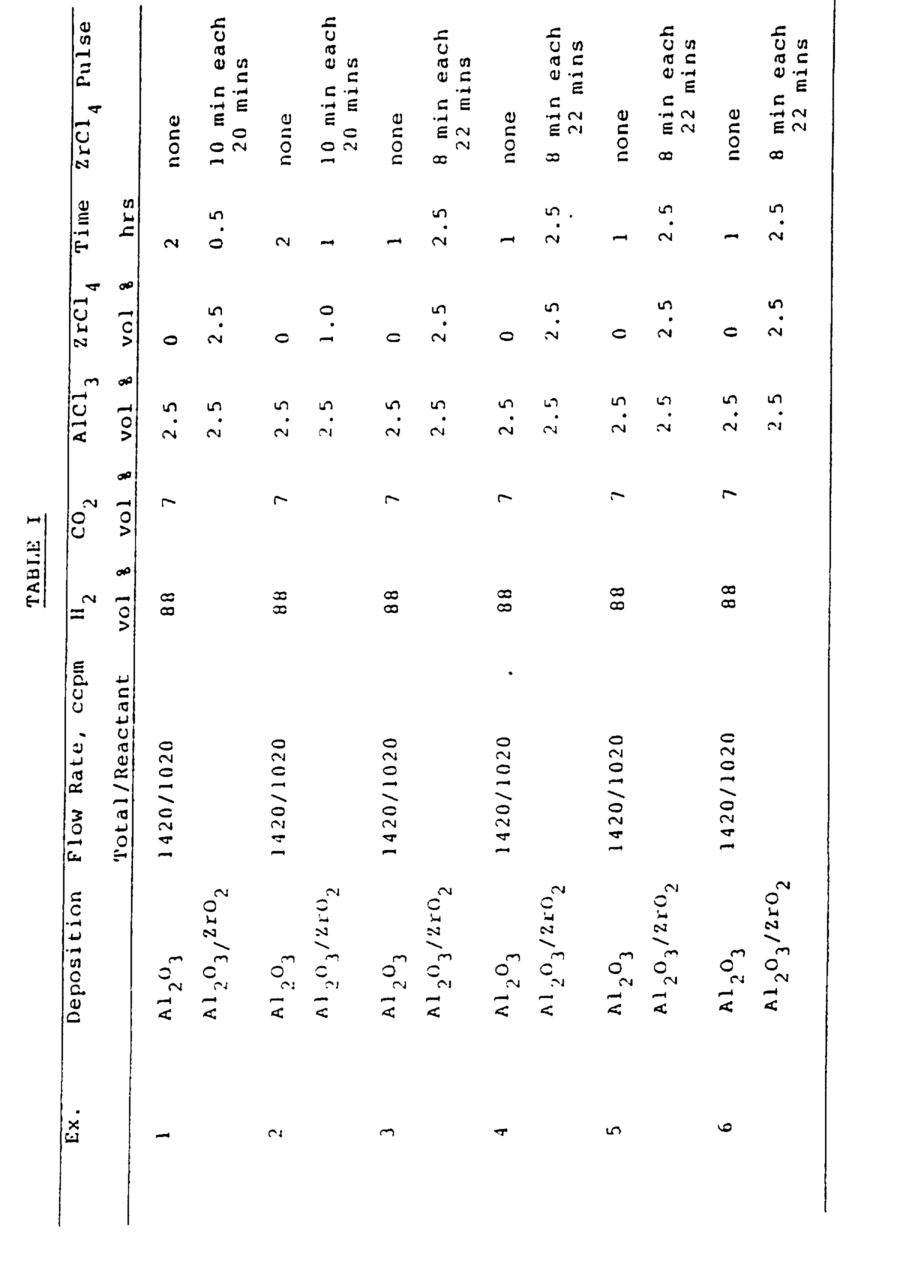

The results of Examples 1-6 are shown in Table II. The thickness of the coatings was measured by the abrasive ball method (Calotest). The chemical composition of the coating was determined by x-ray diffraction analysis. The coating was deposited on the TiC underlayer as a stratified composite of alternating alumina and alumina zirconia portions over a single-phase alumina portion, similar to that illustrated in Figure 1, but without the TiN layer over the oxide coating. The oxide coating and the TiC underlayer show satisfactory thickness and good adherence.

**TABLE II**

| Example | Oxides thickness, microns | X-Ray Diffraction |
|---|---|---|
| 1 | --- | α - Al₂O₃ + ZrO₂ |
| 2 | 1.8 | α - Al₂O₃ + ZrO₂ |
| 3 | 5 | α - Al₂O₃ + ZrO₂ |
| 4 | 0.5-2 | α - Al₂O₃ + ZrO₂ |
| 5 | 0.7-1.5 | α - Al₂O₃ + ZrO₂ |
| 6 | 1.5 | α - Al₂O₃ + ZrO₂ |

Machining tests were performed on the coated cemented carbide cutting tool inserts samples of Example 6 (A) and, for comparison, on a ceramic based insert (B), and on two different commercial grades of TiC based inserts coated with Al₂O₃ (C and D).

Inserts A, B, C and D were tested by turning a 4340 steel workpiece under dry conditions at 213 surface meter per minute (700 sfm), 0.254 mm per revolution (0.01 ipr), 0.5 in DOC. For each insert, 458.9 cm³ (28 cu. in.) of metal were removed in 6.7 min cutting time. The results are illustrated in Fig. 2, showing the average nose and flank wear for each type of insert. The inserts coated by the method according to the invention compared favorably with the materials in current commercial use.

## Claims

1. A wear resistant article comprising:
a WC - Co composite substrate body, a fully dense, adherent, wear resistant, composite ceramic coating on the substrate comprising:
A continuous Al₂O₃ layer about 0.1-20 µm thick and ZrO₂ particles dispersed within the Al₂O₃ portions,
wherein the ZrO₂ particles comprise less than 5 volume % of the composite ceramic layer,
**characterized in that**
the composite ceramic coating is a stratified layer in which Al₂O₃/ZrO₂ portions alternate with the single-phase continuous Al₂O₃ portions.

## Patentansprüche

1. Verschleißbeständiges Erzeugnis umfassend:
einen WC-Co-Verbundsubstratkörper, eine vollständig dichte, haftende, verschleißbeständige keramische Verbundschicht auf dem Substrat, umfassend:
eine ungefähr 0,1 bis 20 Mikron dicke, kontinuierliche Al₂O₃ -Schicht und ZrO₂-Teilchen, die innerhalb der Al₂O₃ Bereiche verteilt sind, wobei die ZrO₂-Teilchen weniger als 5 Vol.-% der keramischen Verbundschicht umfassen,
dadurch gekennzeichnet, daß
die keramische Verbundschicht eine geschichtete (stratified) Schicht ist, in welcher sich Al₂O₃/ZrO₂-Bereiche mit einphasigen kontinuierlichen Al₂O₃-Bereichen abwechseln.

## Revendications

1. Article résistant à l'usure comprenant :
un corps de substrat composite WC-Co,
un revêtement céramique composite adhérent totalement dense et résistant à l'usure déposé sur le substrat, comprenant :
une couche'continue d'Al₂O₃ d'une épaisseur comprise entre 0,1 et 20 µm environ et des particules de ZrO₂ dispersées à l'intérieur des parties d'Al₂O₃, dans laquelle les particules de ZrO₂ constituent moins de 5 % en volume de la couche céramique composite,
**caractérisé en ce que**
le revêtement céramique composite est une couche stratifiée dans laquelle des parties d'Al₂O₃/ZrO₂ alternent avec des parties continues en phase unique d'Al₂O₃.
